# EUROPEAN PATENT APPLICATION

(11) **EP 1 394 792 A2**
(43) Date of publication of application: **03.03.2004**
(21) Application number: 03019763.6
(22) Date of filing: 29.08.2003
(51) Int. Cl.: G11B 19/02, G11B 19/12, G11B 19/10

(54) **Information reproducing apparatus and method**

(30) Priority: 30.08.2002 JP 2002253460
(71) Applicant: Pioneer Corporation, Meguro-ku, Tokyo (JP)
(72) Inventor: Morita, Kenji, Yamada, Kawagoe-shi, Saitam (JP); Muzumura, Yukari, Yamada, Kawagoe-shi, Saitam (JP)
(74) Representative: Jentschura, Rolf, Dipl.-Ing.

(57) **Abstract**

An information reproducing apparatus (10) capable of recording the operating command outputted corresponding to the user's input operation while the menu is reproduced, and automatically executing the recorded operating command, when the same DVD is again reproduced.

## Description

### BACKGROUND OF THE INVENTION

### 1. Field of the Invention

The present invention relates to an information reproducing method and apparatus, such as a DVD player, for reproducing contents information such as audio information or video information.

### 2. Description of the Related Art

Generally, DVDs can record a plurality of work pieces (also referred to as "titles") including movies. Furthermore, DVDs are typically provided with a function to set the caption on/off or select the audio language for each title. The user can enjoy a title of interest by selecting the title of interest and set the caption and/or audio language to the taste.

Thus, DVDs can provide multiple options to the user. Therefore, DVDs are typically designed in such a manner that a menu for providing multiple selectable options to the user is automatically displayed immediately after a DVD is loaded into a DVD player. Specifically, the general guidance about the DVD as well as title headings recorded in the DVD may be displayed in the menu.

To reproduce a desired title in the DVD under a preferable condition, the user have to perform some input operations such as selecting the title, setting the caption and selecting the language.

In a sense, the above-mentioned design is convenient to recognize the contents of the DVD through the menu displayed after the loading of the DVD, when the DVD is a brand-new and reproduced for the first time. On the other hand, when the DVD is reproduced for the first time, input operations including the caption setting and the language selection is also required to reproduce the title under the user's preferable condition.

However, input operations or a waiting mode coming after the menu is displayed may be often vexatious, if the DVD to be reproduced has ever been reproduced a plenty of times and the user is familiar with the contents of the DVD.

For example, a DVD may include four titles A, B, C and D. Then, the user may prefer the title C through the precedent reproduction of the DVD and may decide to reproduce the title C under the same condition as the precedent reproduction before the DVD is loaded into the DVD player. In this case, the menu display after the loading of the DVD and the waiting mode of the DVD player to wait the user's input operation may be rather inconvenient to the user. On the other hand, it may be terribly vexatious to repeat again and again the same input operations.

Moreover, the similar problems may arise in the case of the reproduction of the DVD whose reproduction is interrupted by any reasons.

Furthermore, the above-mentioned problems may arise not only in DVDs and DVD players, but also in any type of information reproducing apparatus arranged to reproduce the menu automatically before the start of the reproduction.

### SUMMARY OF THE INVENTION

The present invention has been accomplished in view of above problems for example. It is therefore an object of the present invention to provide an information reproducing apparatus and method capable of eliminating or alleviating the bothersome user's input operations to reproduce the contents information.

The above object of the present invention can be achieved by an information reproducing apparatus for reproducing contents information including: a menu displaying device for displaying a menu including selectable setting information relating to a reproduction of the contents information; an operating device for an input operation; a retaining device for retaining, as input operation information, information to identify the input operation to select or set the selectable setting information included in the menu; and an automatic input operating device for executing automatically the input operation to select or set the selectable setting information, on the basis of the input operation information that the retaining device retains.

The above object of the present invention can be achieved by a computer program product in a computer-readable medium for tangibly embodying a program of instructions executable by a computer to make the computer function as an information reproducing apparatus for reproducing contents information, the information reproducing apparatus comprising: a menu displaying device for displaying a menu including selectable setting information relating to the reproduction of the contents information; an operating device for an input operation; an retaining device for retaining, as input operation information, information to identify the input operation to select or set the selectable setting information included in the menu; and an automatic input operating device for executing automatically the input operation to select or set the selectable setting information, on the basis of the input operation information that the retaining device retains.

The above object of the present invention can be achieved by an information reproducing method of reproducing contents information including: a menu displaying process of displaying a menu including selectable setting information relating to a reproduction of the contents information; a retaining process of recognizing, using an operating device, an input operation to select or set the selectable setting information included in the menu displayed in the menu displaying process, and retaining, as input operation information, information to identify the recognized input operation; and an automatic input operating process of executing automatically the input operation to select or set the selectable setting information that is included in the menu, on the basis of the input operation information that is retained in the retaining process, if the menu is displayed after the retaining process.

### BRIEF DESCRIPTION OF THE DRAWINGS

FIG. 1 is a block diagram illustrating the information reproducing apparatus according to an embodiment of the present invention.
FIG. 2 is a block diagram illustrating a construction of a DVD player according to the Example.
FIG. 3 is a plan view illustrating a remote controller for the DVD player according to the Example.
FIG. 4 is an explanation view illustrating a menu reproduced by the DVD player according to the Example.
FIG. 5 is an explanation view illustrating another menu reproduced by the DVD player according to the Example.
FIG. 6 is an explanation view illustrating changes in the displayed menu corresponding to input operations.
FIG. 7 is a continuation of FIG. 6 illustrating changes in the displayed menu corresponding to input operations.
FIG. 8 is a continuation of FIG. 7 illustrating changes in the displayed menu corresponding to input operations.
FIG. 9 is a continuation of FIG. 8 illustrating changes in the displayed menu corresponding to input operations.
FIG. 10 is a flow chart showing the operating-command-recording process according to the Example.
FIG. 11 is an explanation view showing the operating command information according to the Example.
FIG. 12 is a flow chart showing the operating-command-executing process according to the Example.

### DETAILED DESCRIPTION OF THE PREFERRED EMBODIMENTS

The preferred embodiments of the present invention will now be discussed, referring to drawings.

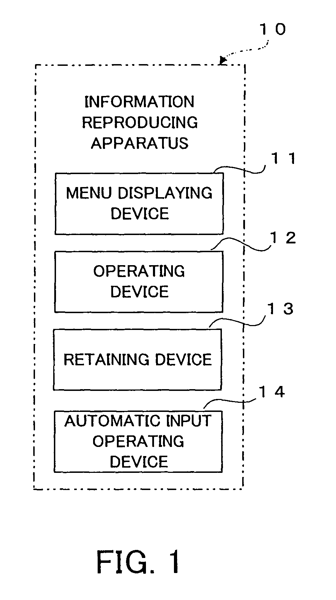

The information reproducing apparatus in an embodiment will now be discussed, referring to FIG. 1.

FIG. 1 shows the information reproducing apparatus in an embodiment of the present invention. As shown in FIG. 1, the information reproducing apparatus 10 according to the embodiment may be an information reproducing apparatus, such as a DVD player, for reproducing contents information. The contents information may be audio information, motion video information or still picture information. The contents information may be supplied from a recording medium in which the contents information is recorded or may be supplied via a communication device such as Internet.

As shown in FIG. 1, the information reproducing apparatus 10 is provided with a menu displaying device 11 for displaying a menu including selectable setting information relating to the reproduction of the contents information, an operating device 12 for input operations, a retaining device 13 for recording or retaining information, as input operation information, to identify each input operation to select or set the selectable setting information included within the menu, and an automatic input operating device 14 for executing automatically each input operation to select or set the selectable setting information.

The menu displaying device 11 is for displaying the menu. The menu may include the selectable setting information. The selectable setting information is the information relating to the reproduction of the contents information. For example, if the contents information includes a plurality of information units (e.g. a plurality of titles), then letters, buttons or icons for indicating titles or title headings may be displayed. In this case, the selectable setting information may be each title heading. On the other hand, for example, if it is possible setting the subtitle or caption on/off when reproducing a movie included in the contents information, then buttons for setting the caption on/off may be displayed. In this case, the selectable setting information may be the information relating to the caption setting (on or off). Additionally, if it is possible selecting the language for the movie included in the contents information, then the selectable language options may be displayed in the menu. In this case, the selectable setting information may be the selectable language options.

The operating device 12 serves as a user interface for input operations against the information reproducing apparatus 10. For example, the operating device 12 may be a switch on a panel, a remote controller, and a voice recognition unit for the voice input. The user executes input operations to select or set the selectable setting information displayed in the menu, via the operating device 12.

The retaining device 13 is for recognizing each input operation and recording the information, as the input operation information, to identify each input operation, into a memory or other recording media.

The input operation information to be recorded by the retaining device 13 may be any type of information capable of identifying each input operation to select or set the selectable setting information. The examples of the information capable of identifying each input operation are information indicating a fact that a switch provided to the operating device 12 is pressed once, information indicating a fact that a cursor in the menu i.e. a highlight is moved to the next tab, information indicating a fact that one of the multiple options in the menu is to be selected, information indicating a command to set the caption on and information indicating a command to start the reproduction, any of which can be the input operation information to be recorded.

The automatic input operating device 14 is for identifying each input operation on the basis of the input operation information recorded or retained by the retaining device 13 and executing each input operation automatically.

For example, the user may load a recording medium such as a DVD including four movies A, B, C and D into the information reproducing apparatus 10 (e.g. a DVD player). In this case, the menu displaying device 11 displays the menu. Successively, the user may execute input operations via the operating device 12, referring to the menu, to select the movie C, set the caption on and select the Japanese as the language in the movie. In this case, the retaining device 13 records or retains the information to identify each input operation, as the input operation information. Then the information reproducing apparatus 10 may start the reproduction of the movie C.

Once the movie C is finished, the user may eject the recording medium and turn off the information reproducing apparatus 10. If the retaining device 13 is arranged to record the input operation information into a non-volatile memory and the like, the input operation information can be retained even if the information reproducing apparatus 10 is turned off.

Then the user may turn on the information reproducing apparatus 10 again and load the same recording medium thereinto. In this case, the automatic input operating device 14 reads the input operation information recorded or retained by the retaining device 13, and identifies input operations actually executed by the user at the precedent reproduction, on the basis of the input operation information and executes identified input operations automatically. As a result, the movie C can be reproduced without the user's input operation.

Thus, according to the information reproducing apparatus 10 in the embodiment, once a series of input operations is recorded, the same contents information can be reproduced without the user's input operation, owing to the construction in such a manner that the user's input operation to select or set the selectable setting information included in the menu is recorded/retained and the recorded/retained input operations can be performed automatically at the subsequent reproduction. Furthermore, when the same contents information is reproduced after each input operation is recorded, the processing in the information reproducing apparatus 10 is prevented from being paused to wait for an input operation while the menu is displayed.

Therefore, if the same contents information is reproduced twice or more, the user is freed from the bothersome input operation because the second or later reproduction of the same contents information is started without any input operation. Thus, the information reproducing apparatus 10 can be improved in its operability and usability.

In the above discussion, a series of input operations that the user actually performed with monitoring the menu is recorded by the retaining device 13, while the menu is displayed by the menu-displaying device 11. As for the information reproducing apparatus 10, however, timing for performing a series of input operations to select or set the selectable setting information included in the menu is not limited to the period when the menu is actually displayed. Similarly, timing for recording input operation information to identify the series of input operations is not limited to the period when the menu is actually displayed.

For example, the information reproducing apparatus 10 may be provided with a specified routine to record a series of input operations to select or set the selectable setting information. More specifically, during the information reproducing apparatus 10 being paused in its reproduction procedure, the routine to record each input operation is started and a "pseudo menu" is displayed by pressing a certain button in the operating device 12. The user can perform the provisional input operations, monitoring the "pseudo menu". Then, the provisional input operations are recorded by the retaining device 13. After that, the provisional input operations recorded by the retaining device 13 are performed automatically by the automatic input operating device.

In this arrangement, once each input operation is recorded, the user's input operation can be omitted when the same contents information is reproduced, and the processing in the information reproducing apparatus 10 is prevented from being paused to wait for the user's input operation during the menu being displayed.

Various aspects of the information reproducing apparatus 10 according to this embodiment will now be discussed.

A menu display-recognizing device for recognizing that the menu displaying device 11 displays the menu may be further provided to the information reproducing apparatus 10. In this case, the retaining device 13 may be arranged to record, as the input operation information, the information to identify each input operation performed when the menu display-recognizing device recognized that the menu is displayed.

Thereby, when the menu is displayed, only the input operations to select or set the selectable setting information displayed in the menu can be recorded. That is, the input operations performed before the menu is displayed, or the input operation after displaying the menu is terminated can be eliminated from the interest to be recorded.

The automatic input operating device may be arranged to automatically perform each input operation when the menu display-recognizing device recognizes that the menu is displayed.

Thereby, when the menu is displayed, the series of input operations can be performed automatically to positively select or set the selectable setting information displayed in the menu.

On the other hand, if the operating device 12 is provided with an input operating mechanism for the input operations, the retaining device 13 may be arranged to record/retain, as the input operation information, both the information to identify the input operating mechanism used for each input operation and the information to indicate a condition of each input operation.

For example, the input operating mechanism may be switches (keys) on the panel, switches (keys) of the remote controller, dials or sliders. When the operating device 12 is provided with such an input operating mechanism, the retaining device 13 may record/retain, as the input operation information, the information indicating a fact that a switch on the panel is pressed once (more specifically, the switch number, the number of times or the period of time each switch is pressed, otherwise the interval of the key entry), the information indicating a fact that the dial of the remote controller is turned 45 degree counterclockwise, or the information indicating that the slider on the panel is displaced to the top or the rightmost position. Thereby, when the automatic input operating device 14 performs automatically a series of input operations, the precedent series of input operations can be identified on the basis of the recorded/retained input operation information.

On the other hand, if the operating device 12 is provided with an output device for outputting an operating command corresponding to an individual input operation, the retaining device 13 may be arranged to record/retain, as the input operation information, the operating command outputted from the output device.

For example, if the operating device 12 includes up, down, right and left arrow keys, and outputs the operating command to displace the cursor in the menu (i.e. highlight) to the next tab if either one of such arrow keys is pressed once, the information for indicating a fact that such an operating command is outputted is recorded/retained, as the input operation information. Thereby, when the automatic input operating device 14 performs automatically a series of input operations, the precedent series of input operations can be identified on the basis of the recorded/retained input operation information.

In another aspect, the menu displaying device 11 may include a display having a displaying screen, and a button indicating device for indicating a button corresponding to the selectable setting information at the given position on the displaying screen. In this case, the retaining device 13 may be arranged to record/retain, as the input operation information, both the information to identify the button corresponding to the selectable setting information selected or set through each input operation via the operating device 12 and the information indicating the status of the button when a series of input operations is performed.

For example, in the top menu of the DVD, title headings recorded in the DVD may be displayed. Once an input operation to select one title heading is performed via the operating device 12, one button corresponding to the selected title heading is highlighted. At this time, the retaining device 13 records/retains, as the input operation information, both the information to identify the button corresponding to the selected title heading (more specifically, the button position or the button number) and the information indicating that the button is selected or highlighted. Thereby, when the automatic input operating device 14 performs automatically a series of input operations, the precedent series of input operations can be identified on the basis of the recorded/retained input operation information.

In another aspect, the retaining device 13 may be arranged to record/retain, as the input operation information, the information that indicates directly the selectable setting information selected or set through each input operation via the operating device 12. For example, if the user performs an input operation to select title C among titles A, B, C and D, which are displayed in the top menu, the retaining device 13 records/retains, as the input operation information, a fact that the selected title is the title C. Also in this arrangement, when the automatic input operating device 14 performs automatically a series of input operations, the precedent series of input operations can be identified on the basis of the recorded/retained input operation information.

In another aspect, the retaining device 13 may be arranged to record/retain, as the input operation information, an executing command that is assigned to the selectable setting information selected or set through each input operation via the operating device 12. For example, when the user performs an input operation of pressing the play button displayed in the menu to start reproduction of a title, the retaining device 13 records/retains, as the input operation information, the executing command to start the reproduction of the title. Also in this arrangement, when the automatic input operating device 14 performs automatically a series of input operations, the precedent series of input operations can be identified on the basis of the recorded/retained input operation information.

If the contents information is recorded in a recording medium such as a DVD, the information reproducing apparatus 10 may be conveniently provided with a reading device for reading the contents information from the recording medium. In this case, the retaining device 13 may be arranged to record/retain, in addition to and in association with the input operation information, recording-medium-identifying information to identify the recording medium that is mounted and read now. Thereby, when the automatic input operating device 14 performs automatically a series of input operations, the series of the past input operations can be identified for each of recording media which have ever been reproduced, on the basis of the recorded/retained recording-medium-identifying information and the input operation information.

For example, when a recording medium R1 is reproduced, the retaining device 13 may record/retain both input operation information FC1 to identify each input operation performed while the menu of the recording medium R1 is displayed and recording-medium-identifying information FR1 to identify the recording medium R1. On the other hand, when a recording medium R2 is reproduced, the retaining device 13 may record/retain both input operation information FC2 to identify the series of input operations performed while the menu of the recording medium R2 is displayed and recording-medium-identifying information FR2 to identify the recording medium R2. Thereby, when the recording medium R1 is again reproduced later, the automatic input operating device 14 can identify the precedent series of input operations performed when the recording medium R1 was reproduced precedently, on the basis of recorded/retained input operation information FC1 and the recording-medium-identifying information FR1. On the other hand, when the recording medium R2 is reproduced again, the automatic input operating device 14 can identify the precedent series of input operations when the recording medium R2 was reproduced precedently, on the basis of the recorded/retained input operation information FC2 and the recording-medium-identifying information FR2.

The embodiments mentioned above may be embodied in a specified apparatus integrated with the hardware or may be embodied in making a computer read a program.

### (Examples)

The Examples of the present invention will now be discussed. In the following Examples, the information reproducing apparatus of the present invention is applied to a DVD player.

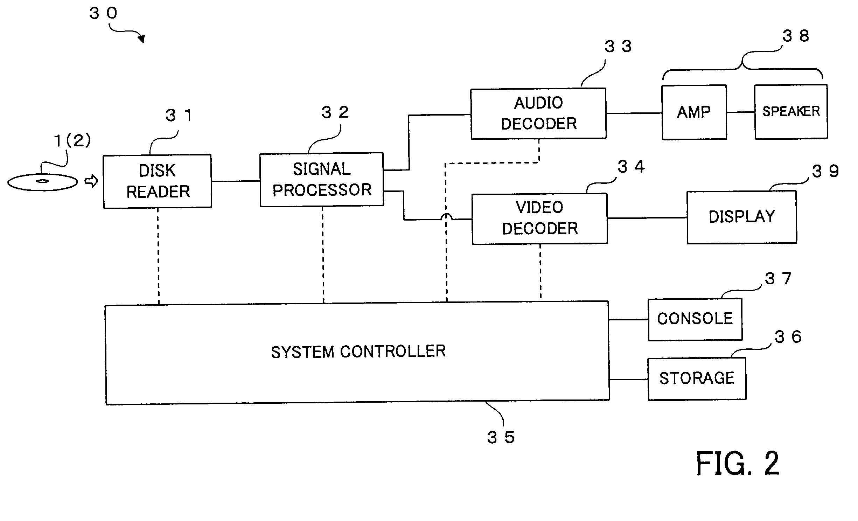

First, the construction of the DVD player according to the Example of the present invention will be discussed, referring to FIG. 2.

FIG. 2 shows a construction of a DVD player according to the Example of the present invention. As shown in FIG. 2, the DVD player 30 according to the Example is an information reproducing apparatus for reproducing audio information and video information recorded in a DVD 1. The audio information may be information obtained by encoding a piece of music and the video information may be information obtained by encoding a motion video or still pictures.

The DVD player 30 is provided with a disk reader 31, a signal processor 32, an audio decoder 33, a video decoder 34, a system controller 35, a storage unit 36 and a console 37. To the DVD player 30, an audio output device 38 including an amplifier and a speaker, and a display 39 are connected.

The disk reader 31 includes an optical pickup for irradiating a light beam onto a record surface of the DVD 1 and receiving the reflection, a spindle motor for rotating the DVD 1, and further a servo controller for controlling the irradiation spot of the light beam and the rotation of the spindle motor (all of which is not shown). The disk reader 31 is operative to read the signal including the audio information and the video information, which are recorded in the DVD 1, and output the read signal to the signal processor.

The signal processor 32 includes a decoder circuit. The signal processor 32 is operative to decode the signal outputted from the disk reader 31 and extract the audio information, the video information and the control information for controlling the reproduction of them. The audio information and the video information extracted by the signal processor are then supplied to the audio decoder 33 and the video decoder 34, respectively.

The audio decoder 33 is a circuit for decoding the audio information. The audio information decoded by the audio decoder 33 is supplied to the audio output device 38 including the amplifier and the speaker.

The video decoder 34 is a circuit for decoding the video information and includes a circuit for decoding the motion video information, a circuit for decoding the still picture information and a circuit for synthesizing the motion video and the still pictures. The video signal decoded by the video decoder 34 is supplied to the display 39 such as a LCD (Liquid Crystal Display) or a PDP (Plasma Display Panel).

The system controller 35 includes a processing circuit and a memory such as a CPU (Central Processing Unit), a ROM (Read Only Memory) and a RAM (Random Access Memory). The system controller 35 is for a global control of the DVD player 30 or the reproduction control, and for an operating-command-recording process and an operating-command-executing process.

The storage unit 36 is a memory for recording information or data to be recorded during the control or processing of the system controller 35. The storage unit 36 is formed of a non-volatile memory device. Therefore, the information or data recorded in the storage unit 36 can be retained, even if the DVD player 30 is turned off.

The console 37 serves as a user interface having a switch panel and a remote controller. The console 37 is used for each input operation of inputting a command to turn on/off, play/stop, select title or set the reproducing conditions.

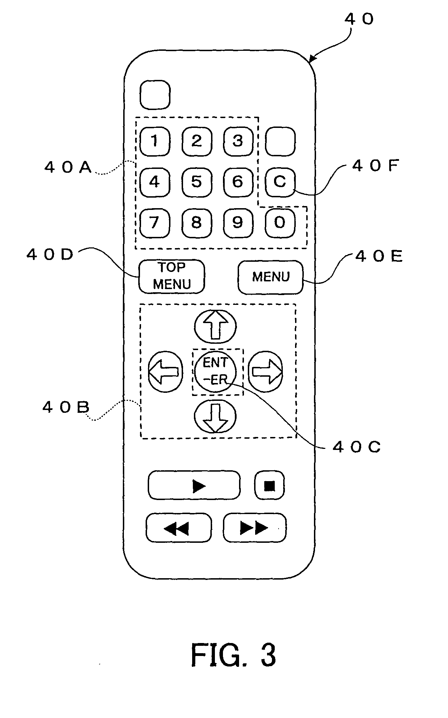

FIG. 3 illustrates the panel surface of the remote controller 40 as a member of the console 37. As shown in FIG. 3, the remote controller 40 includes a numeral button portion 40A having a plurality of numeral buttons, an arrow button portion 40B having a plurality of arrow buttons, an enter button 40C, a top menu button 40D, a menu button 40E and a clear button 40F.

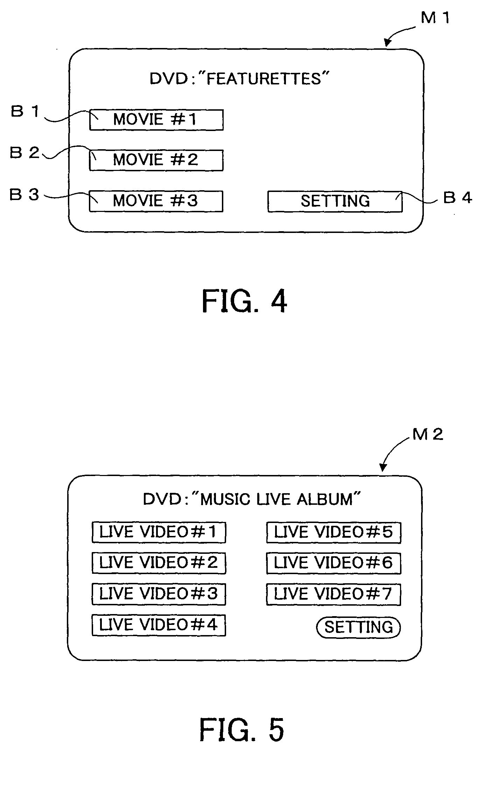

Next, a menu reproduction of the DVD player 30 will be discussed, referring to FIG. 4 and FIG. 5.

According to the DVD standard, it is allowed to record movies, music live video and the like as titles into DVDs. One title up to ninety-nine titles can be recorded into one DVD. The subtitle or caption can be turned on or off. The language in the movie can be selected, if multiple languages (e.g. Japanese, English, French etc.) are recorded as the audio information for each movie.

Thus, DVDs can provide many options to the user. Therefore, DVDs include the menu information to reproduce menus at the reproduction of DVDs, by which the user can select the desirable options. Options may be the title selection, the caption on/off and the language selection.

Once a DVD is loaded into a DVD player, the top menu is automatically reproduced. FIG. 4 and FIG. 5 show exemplary top menus. For example, the DVD 1 in the Example may include "featurettes" made of three short movies. In this case, once the DVD 1 is loaded into the DVD player 30, the top menu as shown in FIG. 4 is reproduced and displayed on the display 39. On the other hand, another DVD 2 may include "music live album" made of seven music live videos. In this case, once the DVD 2 is loaded into the DVD player 30, the top menu as shown in FIG. 5 is reproduced and displayed on the display 39.

The menu can be reproduced not only when DVDs are loaded into DVD players. For example, the menu can be reproduced, when the reproduction of a title is terminated, or when the user presses the top menu button 40D or menu button 40E of the remote controller 40.

The menu is displayed for prompting the user to select or decide something. Therefore, once the menu is displayed, the processing in DVD players typically enters and keeps the waiting mode until the user gives any input operation. For example, when the DVD 1 is reproduced, the DVD player 30 displays the top menu M1 as shown in FIG. 4 and then enters and keeps the waiting mode until the user gives each input operation to select or decide a title (movie #1 to #3). If any input operation is given, the DVD player 30 performs the processing corresponding to the input operation.

In the case when there are many options selectable by the user, it is difficult to display all options on one displaying screen. In this case, therefore, multiple menus are displayed hierarchically. For example, as for the top menu M1 as shown in FIG. 4, if the user select or choose "setting", the setting menu may be displayed to set the caption on/off or the language. The processing in the DVD player 30 remains in the waiting mode, until each input operation is given to set the caption or language or to return the top menu.

Further, as shown in FIG. 4, the top menu M1 displays title headings of three movies #1 to #3 recorded in the DVD 1 and the setting heading. These headings are assigned with virtual buttons B1 to B3, respectively. For example, if the user selects the movie #3 with the remote controller 40 or the like, the button B3 corresponding to the heading of the movie #3 is highlighted. Thus, it is designated that the heading on the display 39 is selected (i.e. the button B3 is pressed).

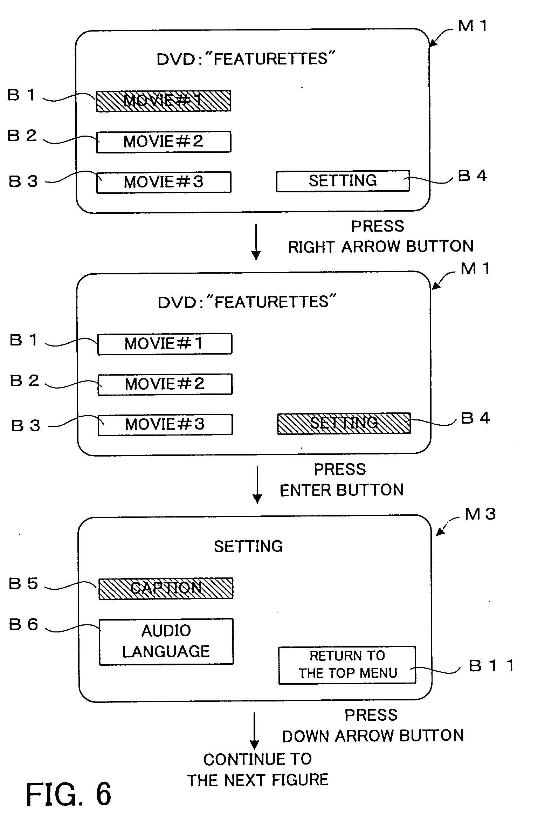

The input operation for the DVD player 30 will now be discussed, referring to FIG. 6 to FIG. 9.

FIG. 6 to FIG. 9 show the changes in the menu display, corresponding to the user's input operation.

For example, once the DVD 1 is loaded into the DVD player 30, the top menu M1 as shown in the upper section of FIG. 6 is displayed. According to the DVD standard, either one of headings in the menu is pre-selected in the initial display of the menu. In the case of FIG. 6, the title heading of the "movie #1" is selected, and the corresponding button B1 is highlighted (the hatched portion in the figure imitates the highlighted portion).

If the user desires to watch the movie #3 in English, the user have to give a series of input operations to set the language into English, select the movie #3 and start the reproduction of the movie #3, to watch the movie #3. The series of input operations is as follows.

First, the user presses the right arrow button among the arrow buttons 40B of the remote controller 40 (see FIG. 3). Thereby, the setting heading is selected and the corresponding button B4 is highlighted, as shown in the middle section of FIG. 6.

Next, the user presses the enter button 40C of the remote controller 40. Thereby, the setting menu M3 is displayed, as shown in the lower section of FIG. 6. The setting menu M3 includes the heading for the caption setting (button B5), the heading for the language setting (button B6) and the heading to return to the top menu M1 (button B11). In the initial menu display, the heading for the caption setting (button B5) is pre-selected.

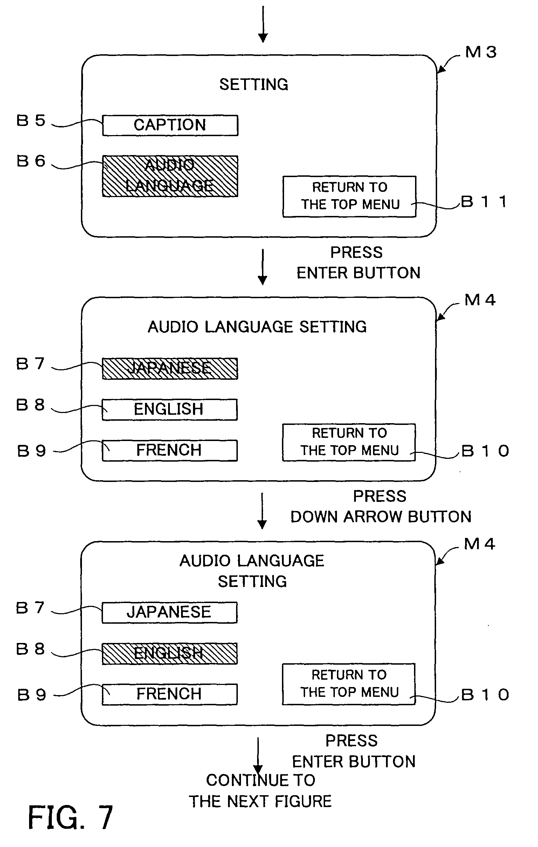

Next, the user presses the under arrow button of the remote controller 40. Thereby, the heading for the language (button B6) is selected, as shown in the upper section of FIG. 7.

Next, the user presses the enter button 40C of the remote controller 40. Thereby, the language setting menu M4 is displayed, as shown in the middle section of FIG. 7. The language-setting menu M4 includes headings for Japanese, English and French (button B7 to B9) and the heading to return to the top menu M1 (button B10). In the initial language setting menu M4, a preset language is selected. In the case of FIG. 7, the preset language is Japanese. Therefore, Japanese (button B7) is pre-selected.

Next, the user presses the under arrow button of the remote controller 40. Thereby, English (button B8) as language in the movie is selected, as shown in the middle section of FIG. 7.

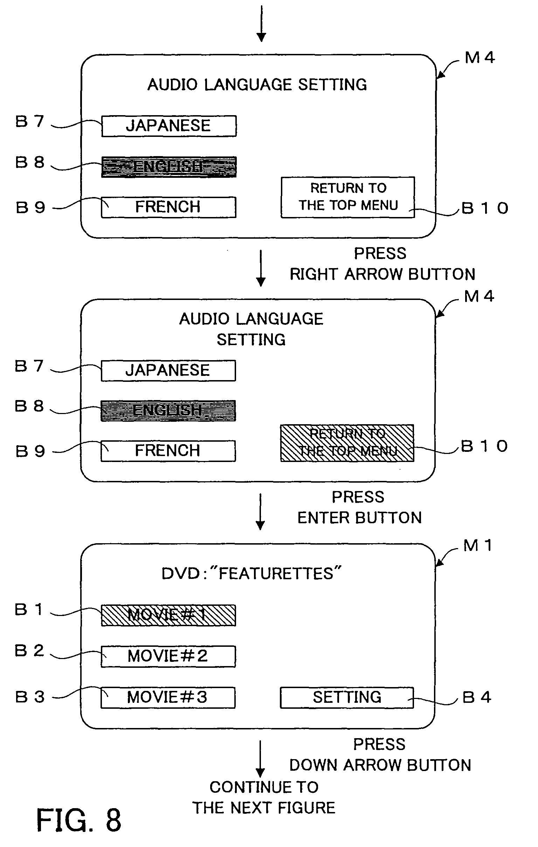

Next, the user presses the enter button 40C of the remote controller 40. Thereby, it is fixed that English is selected as the language in the movie, as shown in the upper section of FIG. 8.

Next, the user presses the right arrow button of the remote controller 40. Thereby, the heading to return to the top menu (button B10) is selected, as shown in the middle section of FIG. 8.

Next, the user presses the enter button 40C of the remote controller 40. Thereby, the top menu M1 is again displayed, as shown in the lower section of FIG. 8.

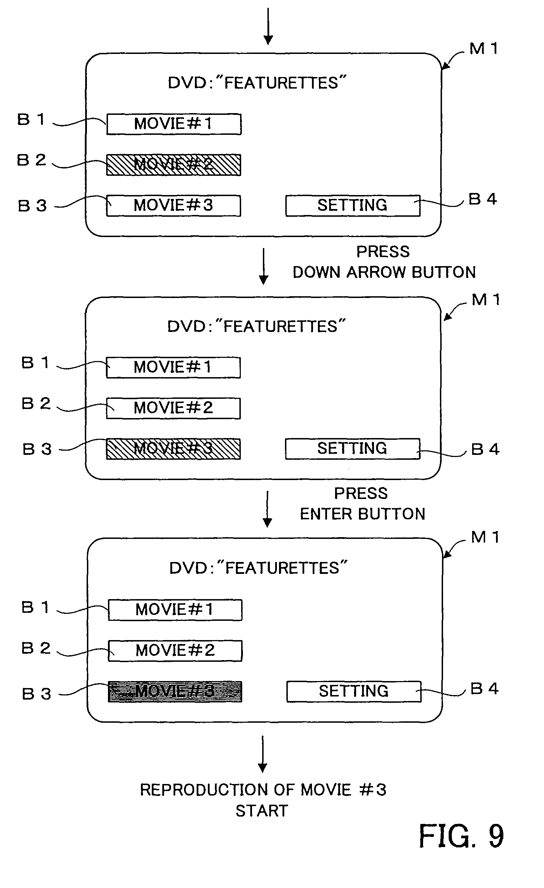

Next, the user presses the under arrow button of the remote controller 40. Thereby, the heading of the movie #2 (button B2) is selected, as shown in the upper section of FIG. 9.

Next, the user presses again the under arrow button of the remote controller 40. Thereby, the heading of the movie #3 (button B3) is selected, as shown in the middle section of FIG. 9.

Next, the user presses the enter button of the remote controller 40. Thereby, it is fixed that the heading of the movie #3 is selected, as shown in the lower section of FIG. 9. As a result, the reproduction of the movie #3 is started.

Thus, each input operation including pressing successively the right arrow button, enter button, under arrow button, enter button, under arrow button, enter button, right arrow button, enter button, under arrow button (twice) and enter button of the remote controller 40 is necessary for the user to select the movie #3 and set the language to English and start reproduction of the selected movie.

The remote controller 40 is operative to output the operating command corresponding to each button, if a button on the panel surface is pressed. For example, if the right arrow button among arrow buttons 40B is pressed, the operating command indicating "right" is outputted. If the enter button 40C is pressed, the operating command indicating "enter" is outputted. The operating command may be transformed into an infrared signal by a light-emitting device disposed within the remote controller 40 and transmitted from the remote controller 40 to the system controller 35 via the photoreceptor device disposed at the DVD player 30. Then, the system controller 35 recognizes the operating command and performs the processing corresponding to the operating command.

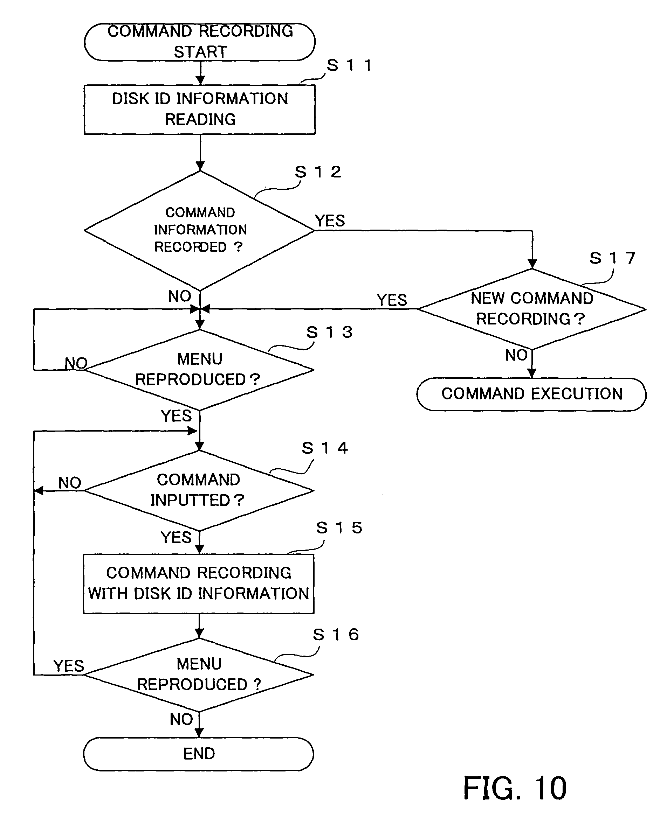

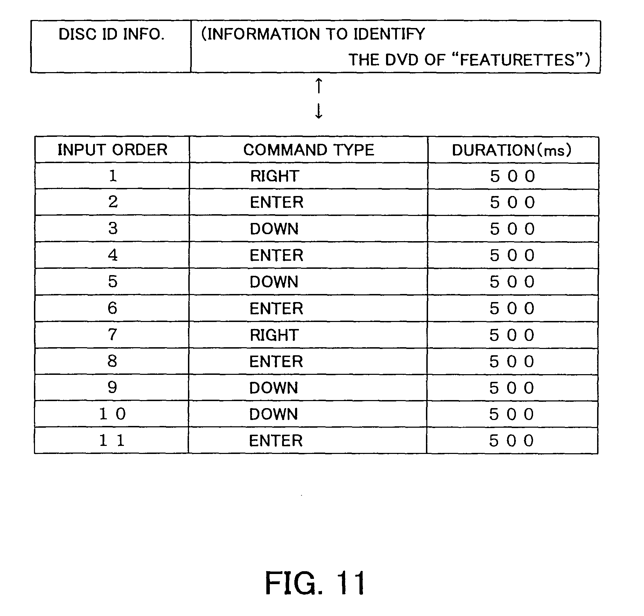

Next, the operating-command-recording process will be discussed, referring to FIG. 10 and FIG. 11.

FIG. 10 shows the flow in the recording of the operating command. As mentioned above, once the DVD 1 is loaded into the DVD player 30, the menu is reproduced, and a series of input operations is given by the user. At this time, the system controller 35 performs the operating-command-recording process of recording the disk-identifying information to identify the loaded DVD 1 and the operating command(s) outputted from the remote controller 40 corresponding to the user's input operation into the storage unit 36.

That is, as shown in FIG. 10, the system controller 35 first reads the disk-identifying information to identify the DVD 1 (step S11). The disk-identifying information may be any type of information capable of characterizing each DVD, on the basis of which the DVD can be identified, such as title information recorded in the DVD.

Next, on the basis of the disk-identifying information, it is identified whether the operating command(s) for the DVD 1 has been already recorded into the storage unit 36 (step S12).

For example, when the user uses the DVD 1 for the first time, the operating command for the DVD 1 has not been recorded yet. In this case (step S12: NO), the system controller 35 determines whether the menu is reproduced (step S13).

Once the menu information (e.g. still picture information etc.) recorded in the DVD 1 is read, and the menu is fully displayed on the display 39 (step S13: YES), the system controller 35 then determines whether the operating command is entered (step S14).

If the user presses any button of the remote controller 40 and the corresponding operating command is outputted from the remote controller 40 and inputted into the system controller 35, the system controller 35 in turn recognizes the input operating command (step S14: YES), and then records the operating command, as the operating command information, into the storage unit 36 (step S15).

At this time, the system controller 35 makes a linkage between the disk-identifying information to identify the DVD 1 and the operating command information, and then records the operating command into the storage unit 36 in association with the disk-identifying information.

Next, the system controller 35 determines whether the menu is still reproduced (step S16).

If the operating command is inputted and thereby the reproduction of the menu is terminated (e.g. when the reproduction of the movie is started, corresponding to each input operation to start the reproduction) (step S16: NO), the operating-command-recording process is terminated.

On the other hand, if the menu remains in its reproduction, the process goes back to the step S14 to wait the input of the next operating command.

Conversely, at the step S12, the operating command(s) for the DVD 1 has been already recorded into the storage unit 36 (step S12: YES), the system controller 35 then determines whether any input for recording a new operating command is given (step S17).

For example, if the user keeps the clear button 40F being pressed during a period from the loading of the DVD 1 to the display of the menu, the system controller 35 determines that the input for recording the new operating command is given (step S17: YES). In this case, the process goes back to the step S13.

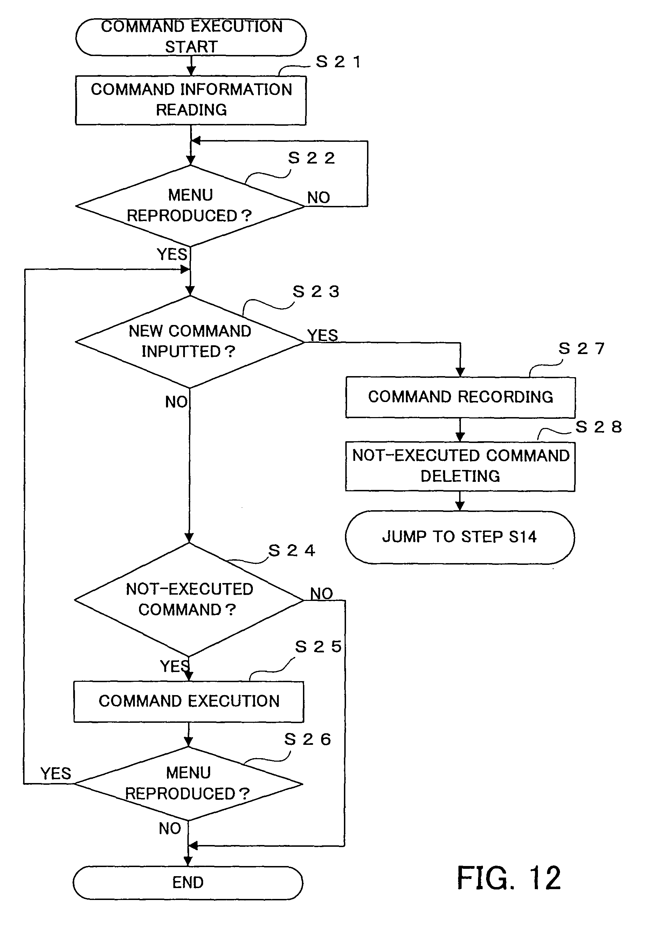

On the other hand, the input for recording the new operating command is not given (step S17: NO), the process advances to the operating-command-executing process (FIG. 12), which will be discussed later.

Now, FIG. 11 shows the operating command information recorded into the storage unit 36 through the operating-command-recording process, corresponding to the user's input operations i.e. setting the audio language to English, selecting the movie #3 and starting or resuming the reproduction of the movie #3 (see FIG. 6 to FIG. 9), after the DVD 1 is loaded into the DVD player 30.

As shown in FIG. 11, the information to identify the DVD 1 is recorded as the disk-identifying information. Further, eleven operating commands are recorded as the operating command information.

The operating command information is to be recorded in the order of a series of operating command inputs. The operating command information includes the information to indicate the type of operating command. For example, "right" in FIG. 11 corresponds to the operating command that is outputted when the right arrow button among arrow buttons 40B of the remote controller 40 is pressed. On the other hand, "enter" in FIG. 11 corresponds to the operating command which is outputted when the enter button 40C of the remote controller 40 is pressed. Further, the operating command information includes the information to indicate the time duration of the operating command output. For example, "500" in FIG. 11 indicates that each operating command output is retained for 500 msec. In other words, the right arrow button or the enter button 40C is kept to be pressed for 500 msec. Thereby, if different processings are assigned depending on the time duration of each button, i.e. depending on whether each button is pressed for a short time or for a long time, it is possible to identify the processing to be performed by referring to the time duration information during the operating-command-executing process as discussed below.

Additionally, the operating command information may include transmittal interval information between or among operating commands. This arrangement is convenient for the case where a certain period of time is required after one operating command is transmitted until the next operating command will be transmitted. For example, if a short video is reproduced when the display screen is switched, it is required to pause the command transmitting during this period. In this case, the transmittal interval information can be used for controlling the command transmitting.

Next, the operating-command-executing processing will be discussed, referring to FIG. 12.

As mentioned above, if the user gives a series of input operations to load the DVD 1 into the DVD player 30, set the audio language to English, select the movie #3 and start the reproduction of the movie #3, the operating command which is outputted corresponding to such a series of input operations is record, as the operating command information, into the storage unit 36. Then, the user may finish the movie #3, eject the DVD 1 and turn off the DVD player 30.

Then, if the user turns on the DVD player 30 and loads the DVD 1 into the DVD player 30 to watch the movie #3 again. At this time, the step S11 in FIG. 10 is performed to read the disk-identifying information from the DVD 1. Then, it is identified whether a series of operating commands for the DVD 1 has been already recorded into the storage unit 36 (step S12). At this time, since the series of operating commands for the DVD 1 has been already recorded into the storage unit 36 (step S12: YES), the operating-command-executing process is performed, if the user does not give any input to record the new operating command (step S17: NO).

FIG. 12 shows the operating-command-executing process. As shown in FIG. 12, the system controller 35 first reads the operating command information recorded in the storage unit 36 (step S21). Specifically, first, the operating command information for the DVD 1 is identified on the basis of the disk-identifying information that is read at the step S11 of FIG. 10. Then, the identified operating command information is read from the storage unit 36.

Next, the system controller 35 determines whether the menu is reproduced (step S22).

Once the menu information (still picture information etc.) recorded in the DVD 1 is read and the menu is fully displayed on the display 39 (step S22: YES), the system controller 35 then determines whether the new operating command is inputted (step S23).

If the new operating command is not inputted (step S23: NO), then it is identified whether any other operating command that has not been executed still remains (step S24).

If any other operating command that has not been executed still remains, the system controller 35 executes one operating command still not executed (step S25).

Next, the system controller 35 determines whether the menu is reproduced (step S26).

If the menu is reproduced, the process goes back to the step S23.

Thus, insofar as the new operating command is not inputted and the menu remains to be reproduced, the system controller 35 repeats the processes from the step S23 to the step S26 to execute the series of operating commands one by one according to the input order indicated by the operating command information (see FIG. 11).

If all operating commands included in the operating command information are finished (step S24: NO), the operating-command-executing process is terminated.

On the other hand, if the user presses any button of the remote controller 40 during the period when the system controller 35 repeats the processes from the step S23 to the step S26, the new operating command is inputted. At this time, the system controller 35 recognizes it at the step S23 (step S23: YES).

Next, the system controller 35 records the newly inputted operating command into the storage unit 36 in association with the disk-identifying information of the DVD 1 (step S27), and deletes the operating command not executed until that time from the storage unit 36 (step S28).

Then, the operating-command-recording process shown in FIG. 10 (step S14 to S16) is performed, to record the new operating command to be inputted from that time.

Thus, according to the DVD player 30 of the Example, the operating command which is outputted corresponding to the user's input operation during the reproduction of the menu is recorded/retained, and thereby the recorded/retained operating command is automatically executed at the second reproduction or later, resulting in the elimination of the user's input operation for the second or later reproduction of the same DVD. Additionally, for the second or later reproduction of the same DVD, the waiting mode of the DVD player 30 to wait any input operation can be avoided during the reproduction of the menu.

Therefore, if the same DVD is reproduced twice or more, the user is freed from the bothersome input operation because the second or later reproduction of the same DVD is started without any input operation. Thus, the DVD player 30 can be improved in its operability and usability.

Additionally, owing to the arrangement in such a manner that the disk-identifying information for the DVD loaded into the DVD player 30 is obtained and recorded in association with the operating command, the operating command for each DVD can be identified and executed, even in the case multiple DVDs have ever been reproduced and the multiple kinds of operating command for each DVD have been recorded. For example, two series of user's input operations are different to each other between the case of the movie #3 recorded in the DVD 1 being reproduced as shown in FIG. 4 and the case of the live video #6 recorded in the DVD 2 being reproduced as shown in FIG. 5, as well as the operating command information to be recorded into the storage unit 36. Even in this case, when the movie #3 in the DVD 1 is reproduced, the operating command associated with the disk-identifying information for the DVD 1 is executed. On the other hand, when the live video #6 in the DVD 2 is reproduced, the operating command associated with the disk-identifying information for the DVD 2 is executed. Thus, the appropriate operating command for each DVD can be executed.

Further, according to the DVD player 30 of the Example, owing to the arrangement in such a manner that the operating command is recorded and the recorded operating command is automatically executed at the second or later reproduction, the user are freed from each input operation while the menu is reproduced (displayed). Therefore, the user ensures the process or detail of the automatically executed input operations through the menu. Thus, the user can enjoy the contents information comfortably, while the DVD is reproduced.

Moreover, the DVD player 30 of the Example is arranged in such a manner that the automatic execution of the operating command recorded in the storage unit 36 is aborted, if the user gives a new input operation before or during the automatic execution of the operating command. Thereby, if the user desires to reproduce a title other than one last reproduced, the automatic execution of the operating command can be aborted to reproduce the desired title.

Additionally, if the user gives the new input operation before or during the automatic execution of the operating command, a new operating command and to-be-inputted new operating command from then is recorded from at the time point when the new operating command is inputted through the new input operation. As a result, the latest input operation can be always executed at the reproduction.

In the Example mentioned above, the user gives a series of input operations against the menu that is displayed when the DVD is loaded into the DVD player. Nevertheless, the present invention is not limited to the Example. For instance, the user may give a series of input operations against the menu that is displayed when the reproduction of one title is finished.

Further, in the above Example, the operating command is recorded. Nevertheless, the present invention is not limited to the Example. For instance, when the user presses any button of the remote controller 40, the information to identify the pressed button may be recorded. Alternatively, the information to identify a button on the display 39, which is highlighted corresponding to the user's input operation, may be recorded. Still further, the executing command that is executed corresponding to the user's input operation may be recorded.

## Claims

1. An information reproducing apparatus (10) for reproducing contents information **characterized in that** the information reproducing apparatus comprises:
a menu displaying device (11) for displaying a menu including selectable setting information relating to a reproduction of the contents information;
an operating device (12) for an input operation;
an retaining device (13) for retaining, as input operation information, information to identify the input operation to select or set the selectable setting information included in the menu; and
an automatic input operating device (14) for executing automatically the input operation to select or set the selectable setting information, on the basis of the input operation information that the retaining device retains.

2. The information reproducing apparatus (10) according to claim 1, **characterized in that** the information reproducing apparatus further comprises a menu display recognizing device for recognizing a fact that the menu displaying device displays the menu, and
the retaining device (13) records, as input operation information, information to identify the input operation that is given when the menu display recognizing device recognizes the fact that the menu displaying device displays the menu.

3. The information reproducing apparatus (10) according to claim 1 or 2, **characterized in that** the information reproducing apparatus further comprises an menu display recognizing device for recognizing a fact that the menu displaying device displays the menu, and
the automatic input operating device (14) executes automatically the input operation, when the menu display recognizing device recognizes the fact that the menu displaying device displays the menu.

4. The information reproducing apparatus (10) according to any one of claims 1 to 3, **characterized in that** the operating device (12) includes an input operating mechanism for the input operation, and
the retaining device (13) retains, as the input operation information, both of information to identify the input operating mechanism used for the input operation and information to indicate a condition of the input operation.

5. The information reproducing apparatus (10) according to any one of claims 1 to 3, **characterized in that** the operating device (12) includes an output device for outputting an operating command corresponding to the input operation, and
the retaining device (13) retains, as the input operation information, the operating command that is outputted from the output device.

6. The information reproducing apparatus (10) according to any one of claims 1 to 3, **characterized in that** the menu displaying device (11) includes a display with a displaying screen; and a button indicating device for indicating each button corresponding to the selectable setting information at certain points on the displaying screen of the display, and
the retaining device (13) retains, as the input operation information, both of information to identify the button corresponding to the selectable setting information that is selected or set through the input operation via the input device and information to indicate the button status at the input operation.

7. The information reproducing apparatus (10) according to any one of claims 1 to 3, **characterized in that** the retaining device (13) retains, as the input operation information, information to indicate directly the selectable setting information that is selected or set through the input operation via the input device.

8. The information reproducing apparatus (10) according to any one of claims 1 to 3, **characterized in that** the retaining device (13) retains, as the input operation information, an executing command assigned to the selectable setting information that is selected or set through the input operation via the input device.

9. The information reproducing apparatus (10) according to any one of claims 1 to 8, **characterized in that** the information reproducing apparatus further comprises an reading device for reading the contents information from a recording medium to reproduce the contents information recorded in the recording medium, and
the retaining device (13) retains, in addition to the input operation information, recording-medium-identifying information to identify the recording medium on which the input operation in relation to the input operation information is performed.

10. A computer program product in a computer-readable medium for tangibly embodying a program of instructions executable by a computer to make the computer function as an information reproducing apparatus (10) for reproducing contents information, **characterized in that** the information reproducing apparatus comprises:
a menu displaying device (11) for displaying a menu including selectable setting information relating to the reproduction of the contents information;
an operating device (12) for an input operation;
an retaining device (13) for retaining, as input operation information, information to identify the input operation to select or set the selectable setting information included in the menu; and
an automatic input operating device (14) for executing automatically the input operation to select or set the selectable setting information, on the basis of the input operation information that the retaining device retains.

11. An information reproducing method of reproducing contents information **characterized in that** the information reproducing method comprises:
a menu displaying process of displaying a menu including selectable setting information relating to a reproduction of the contents information;
a retaining process of recognizing, using an operating device, an input operation to select or set the selectable setting information included in the menu displayed in the menu displaying process, and retaining, as input operation information, information to identify the recognized input operation; and
an automatic input operating process of executing automatically the input operation to select or set the selectable setting information that is included in the menu, on the basis of the input operation information that is retained in the retaining process, if the menu is displayed after the retaining process.
